# EUROPÄISCHE PATENTANMELDUNG

(11) **EP 4 613 084 A1**
(43) Veröffentlichungstag der Anmeldung: **10.09.2025**
(21) Anmeldenummer: 25160203.3
(22) Anmeldetag: 26.02.2025
(51) Int. Cl.: A01B 71/02, A01B 73/04, A01B 33/02

(54) **KLAPPEINRICHTUNG, LANDWIRTSCHAFTLICHES ARBEITSGERÄT MIT KLAPPEINRICHTUNG UND VERFAHREN ZUM KLAPPEN VON RAHMENTEILEN**

(30) Priorität: 07.03.2024 DE 102024106598
(71) Anmelder: Horsch Maschinen GmbH, 92421 Schwandorf (DE)
(72) Erfinder: PRÜLL, Thomas, 92421 Schwandorf (DE); LUBER, Michael, 92421 Schwandorf (DE)
(74) Vertreter: v. Bezold & Partner Patentanwälte - PartG mbB

(57) **Zusammenfassung**

Klappeinrichtung (6), welche zum Klappen von zwei Rahmenteilen (3, 4, 5) zueinander eingerichtet ist. Die Erfindung zeichnet sich dadurch aus, dass die Klappeinrichtung (6) zumindest zwei unterschiedliche Flächen (9, 10) aufweisende Kolben (7, 8) umfasst, wobei mittels einer auf ein Rahmenteil (3, 4, 5) wirkenden Kraft (F) ein Kolben (7, 8) relativ zu dem anderen Kolben (7, 8) bewegbar ist.

## Beschreibung

Die vorliegende Erfindung betrifft eine Klappeinrichtung, ein landwirtschaftliches Arbeitsgerät mit Klappeinrichtung und ein Verfahren zum Klappen von Rahmenteilen mit den Merkmalen des jeweilig zugehörigen Patentanspruches.

Aus dem Stand der Technik sind landwirtschaftliche Arbeitsgeräte und Klappeinrichtungen bekannt, um größere oder große Arbeitsbreiten im Feld realisieren zu können und dennoch hinsichtlich der rechtlichen Vorgaben zu Breite und Höhe im Straßenverkehr diese rechtlichen Vorgaben einhalten zu können, so dass mit dem entsprechenden landwirtschaftlichen Arbeitsgerät auch im Straßenverkehr gefahren werden darf.

Im Betrieb des landwirtschaftlichen Arbeitsgeräts ist es vorteilhaft, dass zumindest eine begrenzte Konturanpassung des Arbeitsgeräts an eine landwirtschaftliche Fläche möglich ist. Bisherige Lösungen zur Konturanpassung sind durch eine aufwändige Ventilsteuerung bzw. Drucksteuerung und zusätzlichen Bauteilen realisiert worden.

Die Aufgabe der vorliegenden Erfindung ist es demnach, eine einfachere Konstruktion der Klappeinrichtung bereitzustellen, welche auf eine komplizierte Ventilsteuerung verzichtet.

Gelöst wird die zugrunde liegende Aufgabe durch eine Klappeinrichtung mit den Merkmalen des Patentanspruches 1, durch ein landwirtschaftliches Arbeitsgerät mit den Merkmalen des Patentanspruches 8 und durch ein Verfahren mit den Merkmalen des Patentanspruches 11.

Erfindungsgemäß ist eine Klappeinrichtung vorgesehen, welche zum Klappen von zwei Rahmenteilen zueinander eingerichtet ist. Die Klappeinrichtung weist zumindest zwei unterschiedliche Flächen aufweisende Kolben auf. Es ist vorgesehen, dass mittels einer auf ein Rahmenteil wirkenden Kraft ein Kolben relativ zu dem anderen Kolben bewegbar ist.

Bevorzugt handelt es sich bei einem der Rahmenteile um ein Mittelteil eines landwirtschaftlichen Arbeitsgeräts und bei dem zumindest einem weiteren Rahmenteil um ein Seitenteil des landwirtschaftlichen Arbeitsgeräts. Bevorzugt sind die Rahmenteile das Mittelteil und zumindest ein Seitenteil. Bevorzugt ist es vorgesehen, dass ein Mittelteil und zwei Seitenteile vorgesehen sind, wobei bevorzugt ein Seitenteil links und das andere Seitenteil rechts am Mittelteil angeordnet ist.

Bevorzugt ist es vorgesehen, dass mittels der Klappeinrichtung das Seitenteil bzw. die Seitenteile gegenüber dem Mittelteil in fest definierte und/oder fest definierbare Stellungen bringbar sind. Eine erste Stellung kann eine Transportstellung und eine zweite Stellung eine Betriebsstellung sein. In der ersten Stellung, also der Transportstellung, kann ein Seitenteil oder die Seitenteile, insbesondere deren Rahmen, mittels der Klappeinrichtung in eine gegenüber dem Mittelteil, insbesondere gegenüber dem Rahmen des Mittelteil, im Wesentlichen senkrechte Position verschwenkt sein. Insbesondere könnten in der Transportstellung ein Seitenteil oder die Seitenteile gegenüber dem Mittelteil einen Winkel aufweisen, welcher mindestens 70° beträgt und maximal 105° beträgt, und insbesondere im Wesentlichen 90° beträgt.

In der zweiten Stellung, also der Betriebsstellung, kann ein Seitenteil oder die Seitenteile, insbesondere deren Rahmen, mittels der Klappeinrichtung in eine gegenüber dem Mittelteil, insbesondere gegenüber dem Rahmen des Mittelteils, im Wesentlichen waagerechte Position verschwenkt sein. Insbesondere könnte somit in der Betriebsstellung ein Seitenteil oder die Seitenteile gegenüber dem Mittelteil einen Winkel aufweisen der mindestens 170° beträgt und maximal 190° beträgt und insbesondere im Wesentlichen 180° beträgt.

Bevorzugt ist die Klappeinrichtung mit den Rahmenteile gekoppelt, so dass durch Bewegung der Klappeinrichtung die Rahmenteile zueinander klappbar sind. Bevorzugt ist die Bewegung der Klappeinrichtung ausgebildet durch ein Aus- und Einfahren der Klappeinrichtung.

Bevorzugt entspricht das Klappen mittels der Klappeinrichtung einer Drehung eines Rahmenteils um eine Drehachse, wobei bevorzugt die Drehachse sich entlang einer Fahrtrichtung oder in einem Winkel dazu erstreckt.

Erfindungsgemäß ist es vorgesehen, dass die Klappeinrichtung zumindest zwei unterschiedliche Flächen, insbesondere wirksame Flächen, bevorzugt wirksame Flächen hinsichtlich eines Ausfahrens der Klappeinrichtung, aufweisende Kolben umfasst. Bevorzugt sind die Flächen der Kolben jeweils die beim Ausfahren der Klappeinrichtung wirksamen Flächen. Die zwei unterschiedlichen Flächen der Kolben bilden bevorzugt die wirksame Fläche der Klappeinrichtung, insbesondere beim Ausfahren der Klappeinrichtung. Wirkt eine Kraft auf die Klappeinrichtung, so bewegt sich der jeweilige Kolben entsprechend, wobei bevorzugt die Kraft zum Ausfahren der Klappeinrichtung durch einen Volumenstrom auf die Kolben bereitgestellt sein kann.

Bevorzugt unterscheiden sich die Flächen der Kolben in ihrer Größe und/oder ihrer Form.

Gemäß einer bevorzugten Ausführungsform kann es vorgesehen sein, dass die Flächen der Kolben zumindest hinsichtlich ihres Flächeninhalts unterschiedlich sind. Das heißt, dass eine der Flächen größer ist als die andere Fläche, das heißt, dass einer der Kolben eine größere Fläche, insbesondere wirksame Fläche, bevorzugt beim Ausfahren, und der andere Kolben eine kleinere Fläche, insbesondere wirksame Fläche, bevorzugt beim Ausfahren, aufweist.

Die wirksame Fläche der Kolben beim Ausfahren der Klappeinrichtung kann auch als bodenseitige Fläche und/oder kolbenbodenseitige Fläche bezeichnet sein. Dementsprechend kann die wirksame Fläche beim Einfahren der Klappeinrichtung als kopfseitige Fläche und/oder kolbenkopfseitige Fläche bezeichnet sein.

Bevorzugt ist eine jeweilige Länge der Klappeinrichtung den jeweiligen Stellungen zugeordnet, das heißt bevorzugt, dass eine erste Länge der Klappeinrichtung der Transportstellung und eine zweite Länge der Klappeinrichtung der Betriebsstellung zugeordnet ist. Um die jeweilige Stellung einnehmen zu können, ist die Länge der Klappeinrichtung durch eine entsprechende Bewegung der Kolben einstellbar, bevorzugt mittels des Volumenstroms.

Ist die Klappeinrichtung ausgefahren, das heißt die Klappeinrichtung befindet sich bevorzugt in der Betriebsstellung, weist die Klappeinrichtung die zweite Länge auf, so sind die Kolben jeweils mit einem Druck, insbesondere bodenseitig, beaufschlagt.

Erfindungsgemäß ist es vorgesehen, dass aufgrund bzw. mittels einer auf ein Rahmenteil wirkenden Kraft ein Kolben relativ zu dem anderen Kolben bewegbar ist. Im ausgefahrenen Zustand bzw. in der Betriebsstellung wirkt durch zumindest eines der Rahmenteile eine Kraft auf die Klappeinrichtung und dementsprechend auf einen bzw. beide Kolben. Dadurch, dass die Kolben unterschiedliche Flächen aufweisen, ist zunächst derjenige Kolben bewegbar, welcher eine kleinere Fläche aufweist, da hier weniger Arbeit verrichtet bzw. aufgewendet werden muss. Das bedeutet daher, dass der andere Kolben mit der größeren Fläche sich zunächst nicht bewegt und im Wesentlichen in seiner Position verbleibt.

Bevorzugt ist die Klappeinrichtung eingerichtet, dass in der Transportstellung und/oder im eingefahrenen Zustand der Klappeinrichtung eine Bewegung der Kolben relativ zueinander im Wesentlichen verhindert ist. Bevorzugt ist die Klappeinrichtung eingerichtet, dass die Bewegung der Kolben im Wesentlichen verhindert ist, wobei dies nicht gelten kann, wenn die wirkenden Kräfte so groß sind, dass diese den vorherrschenden Drucks und die einhergehende Kraft übersteigen und in der Klappeinrichtung in der Transportstellung eine Bewegung der Kolben hervorrufbar ist.

Die Klappeinrichtung ist bevorzugt eingerichtet, dass aufgrund der wirkenden Kraft auf ein Rahmenteil eine Bewegung eines Kolbens relativ zu dem anderen Kolben hervorrufbar ist.

Insbesondere ist die Klappeinrichtung eingerichtet, dass in der Betriebsstellung ohne eine aktive Steuerung, insbesondere ohne aktive Steuerung von Drücken und/oder Volumenströmen, also im Wesentlichen passiv, eine Bewegung eines Kolbens zu dem anderen Kolben möglich ist. Die Klappeinrichtung ist bevorzugt eingerichtet, der Bewegung des Rahmenteils, auf welches die Kraft wirkt, durch eine Bewegung des Kolbens nachzufolgen.

Dadurch, dass erfindungsgemäß bei Wirken der Kraft auf ein Rahmenteil zunächst ein Kolben relativ zu dem anderen Kolben bewegbar ist, kann hierdurch eine Anpassung eines Rahmenteils bzw. eines Seitenteils an Bodenkonturen bzw. sich ändernde Bodenkonturen bereitgestellt sein.

Dadurch, dass sich aufgrund der wirkenden Kraft zunächst einer der Kolben bewegt, nämlich relativ zu dem anderen Kolben, insbesondere in der Betriebsstellung, verändert sich dementsprechend die Länge der Klappeinrichtung, abhängig von dem zurückgelegten Weg und/oder von dem zurücklegbaren Weg des Kolbens relativ zu dem anderen Kolben. Der zurückgelegte und/oder zurücklegbare Weg des Kolbens relativ zu dem anderen Kolben entspricht beispielsweise einem Hub des Kolbens. Bevorzugt kann es sein, dass der zurückgelegte und/oder zurücklegbare Weg des Kolbens, bevorzugt die Länge der Klappeinrichtung in der Betriebsstellung, um einen bestimmten und/oder bestimmbaren Betrag veränderbar ist, wobei bevorzugt mittels der Bewegung des Kolbens relativ zu dem anderen Kolben die Länge der Klappeinrichtung verkürzbar und/oder verlängerbar ist, und wobei der Betrag bevorzugt ±25 mm, weiter bevorzugt ±15 mm und bevorzugter ±12,5 mm ist. Bevorzugt kann das einer Änderung des Winkels zwischen den Rahmenteilen, insbesondere eines Seitenteils zu dem Mittelteil, von höchstens ±5°, bevorzugt höchstens ±3° und besonders bevorzugt höchstens ±2° entsprechen.

Gemäß einer bevorzugten Ausführungsform kann es vorgesehen sein, dass ein Hub des einen Kolbens kleiner ist als ein Hub des anderen Kolbens. Bevorzugt ist der Hub des Kolbens mit der kleineren Fläche kleiner als ein Hub des Kolbens mit der größeren Fläche.

Gemäß einer weiteren bevorzugten Ausführungsform kann es vorgesehen sein, dass die Bewegung des einen Kolbens relativ zu dem anderen Kolben begrenzt ist, bevorzugt mittels einer Begrenzungseinrichtung. Das heißt, dass der eine Kolben relativ zu dem anderen Kolben lediglich um eine festsetzbare und/oder festgesetzte Länge bewegbar ist. Bevorzugt weist die Begrenzungseinrichtung eine erste Begrenzung und eine zweite Begrenzung auf, wobei bevorzugt die erste Begrenzung eingerichtet ist, die Bewegung des Kolbens in eine erste Richtung zu begrenzen, und die zweite Begrenzung eingerichtet ist, die Bewegung des Kolbens in eine zweite Richtung, welche der ersten Richtung entgegengesetzt ist, zu begrenzen.

Falls der Kolben in seiner Bewegung begrenzt ist, das heißt, dass sich der Kolben in diese Richtung nicht mehr weiter bewegen kann, bleibt die Klappeinrichtung zunächst unverändert. Wirkt eine Kraft auf die Klappeinrichtung, welche größer ist als die durch den vorliegenden Druck auf den anderen Kolben wirkende Kraft, so bewegt sich dieser dann entsprechend.

Gemäß einer weiteren bevorzugten Ausführungsform kann es vorgesehen sein, dass die unterschiedlichen Flächen eine wirksame Fläche, insbesondere hinsichtlich dem Ausfahren der Klappeinrichtung, ausbilden.

Gemäß einer weiteren bevorzugten Ausführungsform kann es vorgesehen sein, dass bei Wirken der Kraft auf eines der Rahmenteile zunächst der Kolben mit geringerer Fläche bewegbar ist und bei Eintreten einer Wechselwirkung mit dem anderen Kolben der andere Kolben bewegbar ist. Insbesondere ist der andere Kolben bewegbar mit dem Kolben, wenn die auf das Rahmenteil wirkende Kraft hinreichend groß ist, so dass die nötige Kraft bereitgestellt ist, um den Druck in der Klappeinrichtung entgegenwirken zu können.

Bevorzugt ist es gemäß einer Ausführungsform vorgesehen, dass die auf ein Rahmenteil wirkende Kraft durch Bodenunebenheiten einer landwirtschaftlichen Fläche hervorgerufen ist. Bodenunebenheiten können beispielsweise Konturveränderungen sein, also etwa Hanglagen, Gefälle oder dergleichen, welchen das Arbeitsgerät nachfolgen soll, wodurch das Arbeitsgerät, insbesondere das entsprechende Seitenteil, Ausgleichsbewegungen relativ zu dem Mittelteil ausführt.

Gelöst wird die zugrunde liegende Aufgabe von einem landwirtschaftlichen Arbeitsgerät mit zumindest zwei zueinander klappbaren Rahmenteilen, welche bevorzugt in die Transportstellung und die Betriebsstellung klappbar sind. Das landwirtschaftliche Arbeitsgerät zeichnet sich dadurch aus, dass die Rahmenteile mittels einer Klappeinrichtung, bevorzugt nach einer Ausführungsform, klappbar sind.

Bei den Rahmenteilen des landwirtschaftlichen Arbeitsgeräts kann es sich um das Mittelteil und zumindest ein Seitenteil handeln.

Gemäß einer bevorzugten Ausführungsform kann es vorgesehen sein, dass die Klappeinrichtung mit einem Druckspeicher fluidisch verbunden ist, wobei bevorzugt der Druckspeicher eingerichtet ist, ein durch die Bewegung des Kolbens relativ zu dem anderen Kolben verdrängtes Volumen aufzunehmen oder benötigtes Volumen bereitzustellen. Bevorzugt ist die Klappeinrichtung eingerichtet, mit dem Druckspeicher fluidisch verbindbar zu sein.

Bewegt sich der Kolben aufgrund der auf das Rahmenteil wirkenden Kraft, so wird, je nach Richtung der wirkenden Kraft auf den Kolben, Volumen verdrängt oder benötigt. Dadurch, dass keine aktive Steuerung, insbesondere in der Betriebsstellung, vorgesehen ist, ist der Druckspeicher vorgesehen, welcher eingerichtet ist, das verdrängte Volumen aufzunehmen und das benötigte Volumen bereitzustellen.

Bevorzugt ist der Druckspeicher fluidisch mit der Klappeinrichtung verbunden und/oder verbindbar, wodurch ein fluidischer Austausch zwischen der Klappeinrichtung und dem Druckspeicher möglich ist.

Bevorzugt ist es vorgesehen, dass das landwirtschaftliche Arbeitsgerät eine Fördereinheit, beispielsweise eine Fluidpumpe aufweist, welche zum Fördern und/oder Bereitstellen von Fluid für die Klappeinrichtung vorgesehen ist, wodurch der Kolben bzw. die Kolben der Klappeinrichtung entsprechend bewegbar sind und dementsprechend auch die Klappeinrichtung selbst bewegbar ist, wobei bevorzugt die Länge der Klappeinrichtung einstellbar ist.

Bevorzugt ist es vorgesehen, dass in der Betriebsstellung und/oder der Transportstellung die Klappeinrichtung von der Fluidpumpe getrennt ist und/oder der geförderte Volumenstrom zwischen der Fluidpumpe und der Klappeinrichtung im Wesentlichen 0 l/min beträgt.

Bevorzugt ist zum Einfahren und Ausfahren der Klappeinrichtung eine entsprechende Steuerungs- und/oder Regelungseinheit vorgesehen, welche zumindest ein Ventil umfassen kann. Die Steuerungs- und/oder Regelungseinheit ist eingerichtet, die Klappeinrichtung mit Fluid zu versorgen und/oder einen Volumenstrom bereitzustellen, um die Klappeinrichtung ein- und ausfahren zu können.

Bevorzugt ist es vorgesehen, dass der beaufschlagte Druck auf die Kolben in der Betriebsstellung vorgebbar und/oder vorgegeben ist. Bevorzugt ist die Steuerungs- und/oder Regelungseinheit eingerichtet, den Druck auf die Kolben vorzugeben, beispielsweise mittels entsprechender Einstellungen der Ventile, der Fördereinheit und/oder dergleichen. Durch den vorgegebenen und/oder vorgebbaren Druck kann eine Vorspannung der Klappeinrichtung bereitgestellt sein. Die Vorspannung kann von dem vorliegenden Arbeitsgerät, den Betriebsbedingungen, beispielsweise Bodenart, Wetter, und/oder dergleichen, abhängig sein. Beispielsweise kann durch eine Nutzereingabe und/oder automatisch die Vorspannung einstellbar sein.

Die zugrunde liegende Aufgabe wird gelöst durch ein Verfahren zum Klappen von zwei Rahmenteilen zueinander mittels einer Klappeinrichtung, umfassend die Verfahrensschritte:
a) Bereitstellen einer Klappeinrichtung, bevorzugt einer Klappeinrichtung nach einer Ausführungsform;
b) Betätigen der Klappeinrichtung und Bringen eines Rahmenteils in eine Betriebsstellung durch eine Bewegung beider Kolben;
c) in der Betriebsstellung, Bewegen eines der Kolben relativ zu dem anderen Kolben mittels einer auf ein Rahmenteil wirkenden Kraft.

Bevorzugt kann es vorgesehen sein, dass die Länge der Klappeinrichtung in der Betriebsstellung vorgegeben ist. Bevorzugt ist an dem jeweiligen Rahmenteil, insbesondere Seitenteil, zumindest ein Tiefenführungselement vorgesehen, beispielsweise ein Tiefenführungsrad und/oder dergleichen. Durch das Tiefenführungselement kann bei einem Ausklappen des Seitenteils gegenüber dem Mittelteil die Klappbewegung beeinflusst werden. Insbesondere kann das Ausklappen des Seitenteils begrenzt sein. Da mittels des Tiefenführungselements Kraft gegen die landwirtschaftliche Fläche aufgebracht werden müsste, was insbesondere bei Kontaktieren des Tiefenführungselements mit der landwirtschaftlichen Fläche einen Druckanstieg in der Klappeinrichtung zur Folge hat bzw. notwendig macht, kann durch eine entsprechende Steuerung und/oder Regelung eine Begrenzung des Klappens erreicht sein.

Bevorzugt kann die Klappeinrichtung eine hydraulisch arbeitende und/oder pneumatisch arbeitende Klappeinrichtung sein. Bevorzugt kann es vorgesehen sein, dass die Klappeinrichtung zumindest einen Aktor aufweist. Der Aktor ist bevorzugt ein pneumatischer und/oder hydraulischer Zylinder, das heißt bevorzugt, dass der Aktor pneumatisch, hydraulisch oder eine Mischform daraus betreibbar ist.

Bevorzugt kann die Klappeinrichtung einen Aktor aufweisen, wobei die zwei Kolben gebildet sind durch einen Kolben und einer Kolbenstange, welche relativ zu dem Kolben bewegbar ist. Bevorzugt sind der Kolben und die Kolbenstange miteinander gekoppelt.

Bevorzugt erstreckt sich die Kolbenstange durch den Kolben hindurch. Weiter bevorzugt teilen die zwei Kolben den Aktor in eine erste fluidische Kammer und eine zweite fluidische Kammer, bevorzugt eine bodenseitige Kammer und eine kopfseitige Kammer. Besonders bevorzugt sind die zwei fluidischen Kammern innerhalb des Aktors voneinander fluidisch getrennt, das heißt, dass kein Fluid zwischen den fluidischen Kammern mittels der Kolben austauschbar ist. Insbesondere ist ein Dichtelement vorgesehen, welches eingerichtet ist, den Kolben und die Kolbenstange miteinander dichtend zu koppeln.

Die wirksame Fläche zum Ausfahren der Klappeinrichtung ist bevorzugt gebildet aus der Fläche des Kolbens und der Fläche der Kolbenstange. Die wirksame Fläche ist bevorzugt die bodenseitige Fläche, das heißt die Fläche, welchem dem Boden des Aktors zugewandt ist.

Besonders bevorzugt ist die Kolbenstange relativ zu dem Kolben bewegbar, insbesondere begrenzt bewegbar. Bevorzugt ist der Kolben und/oder die Kolbenstange eingerichtet, eine Führung gegenüber dem jeweils anderen Element bereitzustellen. Bevorzugt ist eine Begrenzungseinheit vorgesehen, welche eingerichtet ist, die Bewegung der Kolbenstange relativ zu dem Kolben zu begrenzen.

Bevorzugt kann die Begrenzungseinheit ein erstes Begrenzungselement, ein zweites Begrenzungselement, ein drittes Begrenzungselement und ein viertes Begrenzungselement aufweisen. Bevorzugt sind die Begrenzungselemente eingerichtet, paarweise miteinander wechselzuwirken. Bevorzugt ist das erste Begrenzungselement und das zweite Begrenzungselement an der Kolbenstange angeordnet und/oder davon ausgebildet und das dritte Begrenzungselement und das vierte Begrenzungselement an dem Kolben angeordnet und/oder davon ausgebildet. Weiter bevorzugt sind das dritte Begrenzungselement und das vierte Begrenzungselement zwischen dem ersten Begrenzungselement und dem zweiten Begrenzungselement angeordnet, bevorzugt entlang einer Erstreckung der Kolbenstange gesehen.

Bevorzugt kann es sich bei dem Aktor um einen Zylinder handeln. Der Boden kann auch als Aktorboden bzw. Zylinderboden bezeichnet sein. Der Kopf kann auch als Aktorkopf bzw. Zylinderkopf bezeichnet sein.

Bevorzugt ist es vorgesehen, dass die Klappeinrichtung eingerichtet ist, dass in der Transportstellung der Kolben und die Kolbenstange an dem Aktorboden anliegen und/oder mit dem Aktorboden in Kontakt stehen, wobei bevorzugt in der Transportstellung die Kolbenstange relativ zu dem Kolben in seiner Position fest ist, also nicht gegenüber dem Kolben verlagerbar ist. Bevorzugt ist es vorgesehen, dass Klappeinrichtung eingerichtet ist, dass in der Betriebsstellung der Kolben an dem Aktorkopf anliegt und/oder mit dem Aktorkopf in Kontakt steht, wobei in der Betriebsstellung die Kolbenstange relativ zu dem Kolben bewegbar ist.

Bevorzugt kann die Klappeinrichtung durch zwei, eine Einheit bildende Aktoren, ausgebildet sein, wobei ein erster Aktor einen Kolben und ein zweiter Aktor den anderen Kolben aufweist. Bevorzugt teilt der Kolben den ersten Aktor in zwei fluidisch voneinander getrennte fluidische Kammern und der andere Kolben den zweiten Aktor in zwei fluidisch voneinander getrennte Kammern. Bevorzugt weisen der erste Aktor und der zweite Aktor keine gemeinsame fluidische Kammer auf, wobei bevorzugt fluidische Kammern der Aktoren im Wesentlichen zeitgleich befüllbar sind, insbesondere funktional zusammenhängende fluidische Kammern. Beispielsweise können die bodenseitigen fluidischen Kammern gleichzeitig befüllbar sein, um die Klappeinrichtung auszufahren bzw. die Rahmenteile zueinander zu klappen. Es können jedoch auch alle Kammern der Aktoren unabhängig voneinander befüllbar sein.

Erfindungsgemäß ist es vorgesehen, dass die Kolben unterschiedliche Flächen aufweisen. Das heißt, dass ein Kolben kleiner als der andere Kolben hinsichtlich der Fläche ist, so dass der Kolben eines Aktors kleiner ist als der Kolben des anderen Aktors.

Bevorzugt ist der Kolben des ersten Aktors mit einer ersten Kolbenstange und der Kolben des zweiten Aktors mit einer zweiten Kolbenstange gekoppelt, insbesondere fest verbunden.

Bevorzugt kann die Klappeinrichtung durch zwei Aktoren ausgebildet sein, wobei ein erster Aktor einen Kolben und ein zweiter Aktor den anderen Kolben aufweist.

Zusammengefasst sind zumindest drei Ausführungsformen der Klappeinrichtung denkbar, nämlich
- ein Aktor mit einem Kolben und einem anderen Kolben, welcher durch die Kolbenstange gebildet ist;
- zwei, eine Einheit bildende Aktoren;
- zwei Aktoren,
jeweils mit dem erfindungsgemäßen Gedanken, dass die Klappeinrichtung zumindest zwei unterschiedliche Fläche aufweisende Kolben umfasst, wobei mittels der auf ein Rahmenteil wirkende Kraft ein Kolben relativ zu dem anderen Kolben bewegbar ist

Bei dem landwirtschaftlichen Arbeitsgerät kann es sich beispielsweise um selbstfahrende oder angehängte Arbeitsgeräte handeln, wie etwa Feldspritzen, Sämaschinen, Bodenbearbeitungsmaschinen wie Scheibeneggen, Grubber, Striegel, Hacken. Weitere landwirtschaftliche Arbeitsgeräte sowie Kombinationen sind ebenso denkbar.

Im Sinne der Anmeldung können Merkmale, die im Zusammenhang mit anderen Merkmalen offenbart sind, auch als für sich allein gestellt offenbart angesehen werden. Merkmale, die mittels "und/oder" miteinander verbunden sind, sind für sich alleine und in Kombination mit den weiteren Merkmalen als offenbart zu verstehen.

Alle Merkmale, die für die Klappeinrichtung, das landwirtschaftliche Arbeitsgerät und das Verfahren offenbart sind, können jeweils in korrespondierender Weise untereinander verwendet werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den entsprechenden Zeichnungen zu entnehmen. Hierbei zeigen:
Figur 1 eine schematische Darstellung eines Arbeitsgeräts mit einer Klappeinrichtung;
Figuren 2A, 2B, 3A, 3B eine Darstellung der Funktionsweise der Klappeinrichtung
Figuren 4A bis 4E eine Ausführungsform der Klappeinrichtung;
Figuren 5A bis 5C eine Ausführungsform der Klappeinrichtung;
Figur 6 eine Ausführungsform der Klappeinrichtung;
Figur 7 ein Verfahren zum Klappen mittels der Klappeinrichtung.

In den Figuren werden gleiche Bauteile mit den gleichen Bezugszeichen bezeichnet, wobei in manchen Figuren die Bezugszeichen zur besseren Übersichtlichkeit weggelassen werden können.

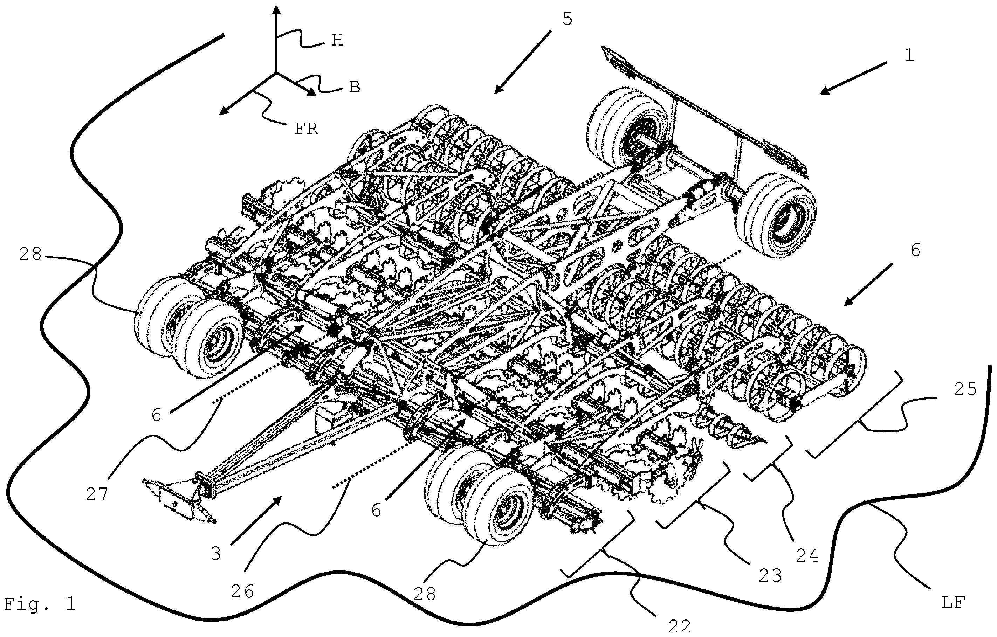

In der Figur 1 ist ein landwirtschaftliches Arbeitsgerät 1 in einer perspektivischen Ansicht dargestellt. Rein beispielhaft ist das landwirtschaftliche Arbeitsgerät 1 als eine Scheibenegge dargestellt. Das landwirtschaftliche Arbeitsgerät 1 kann mehrere unterschiedliche Arbeitssegmente aufweisen, wobei beispielhaft das Arbeitsgerät 1 ein Messerwalzensegment 22, ein Scheibensegment 23, ein Striegelsegment 24 und ein Packersegment 25 aufweist. Das Arbeitsgerät 1 ist eingerichtet zum Bearbeiten einer landwirtschaftlichen Fläche LF. Bevorzugt sind die jeweiligen Segmente 22, 23, 24, 25 entlang einer Fahrtrichtung gesehen hintereinander angeordnet und erstrecken sich jeweils in einer Richtung quer zu der Fahrtrichtung, welche als eine Breitenrichtung B bezeichnet sein kann.

Das Arbeitsgerät 1 weist mehrere Rahmenteile 2 auf, vorliegend ein erstes Rahmenteil 3, welches ein Mittelteil 3 des Arbeitsgeräts 1 darstellt, sowie ein zweites Rahmenteil 4, welches ein erstes Seitenteil 4 des Arbeitsgeräts 1 darstellt, und ein drittes Rahmenteil 5, welches ein zweites Seitenteil 5 des Arbeitsgeräts 1 darstellt.

Die Seitenteile 4, 5 sind links bzw. rechts von dem Mittelteil 3 angeordnet und mit diesem verbunden, insbesondere drehbar verbunden. Bevorzugt ist das erste Seitenteil 4 drehbar um eine erste Drehachse 26 und das zweite Seitenteil 5 drehbar um eine zweite Drehachse 27 mit dem Mittelteil 3 verbunden.

Darüber hinaus weist das Arbeitsgerät 1 zumindest eine Klappeinrichtung 6 auf, wobei bevorzugt jedem Seitenteil eine Klappeinrichtung 6 zugeordnet sein kann. Die Klappeinrichtung 6 ist eingerichtet, das jeweilige Seitenteil 4, 5 gegenüber dem Mittelteil 3 zu klappen, also gegenüber dem Mittelteil 3 um die jeweilige Drehachse 26, 27 zu drehen.

In der Figur 1 ist das Arbeitsgerät 1 in einer Betriebsstellung dargestellt, das heißt, dass das Arbeitsgerät 1 zum Bearbeiten der landwirtschaftlichen Fläche LF verwendbar ist, und zwar über die volle mögliche Breite des Arbeitsgeräts 1. In der Betriebsstellung

Bevorzugt ist es vorgesehen, dass mittels der Klappeinrichtung 6 das Seitenteil 4, 5 bzw. die Seitenteile 4, 5 gegenüber dem Mittelteil 3 in fest definierte und/oder fest definierbare Stellungen bringbar sind. Eine erste Stellung ist eine Transportstellung und eine zweite Stellung eine Betriebsstellung. In der Transportstellung, ist ein Seitenteil 4,5 oder die Seitenteile 4, 5 mittels der Klappeinrichtung 6 in eine gegenüber dem Mittelteil 3 im Wesentlichen senkrechte Position verschwenkt.

In der Betriebsstellung ist ein Seitenteil 4, 5 oder die Seitenteile 4, 5 mittels der Klappeinrichtung 6 in eine gegenüber dem Mittelteil 3 im Wesentlichen waagerechte Position verschwenkt.

Bevorzug können an den Seitenteilen 4, 5 Tiefenführungselemente 28, bevorzugt in einem vorderen Bereich des Arbeitsgeräts 1 angeordnet sein, um die Bewegung mittels der Klappeinrichtung 6 in die Betriebsstellung zumindest teilweise zu begrenzen. Vorliegend wird dies auch von dem Packersegment 25 mit übernommen.

Bevorzugt weist die Klappeinrichtung 6 zumindest einen Aktor 16 auf. Bevorzugt ist die Klappeinrichtung 6 mit dem Mittelteil 3 einerseits und mit einem Seitenteil 4, 5 andererseits gekoppelt.

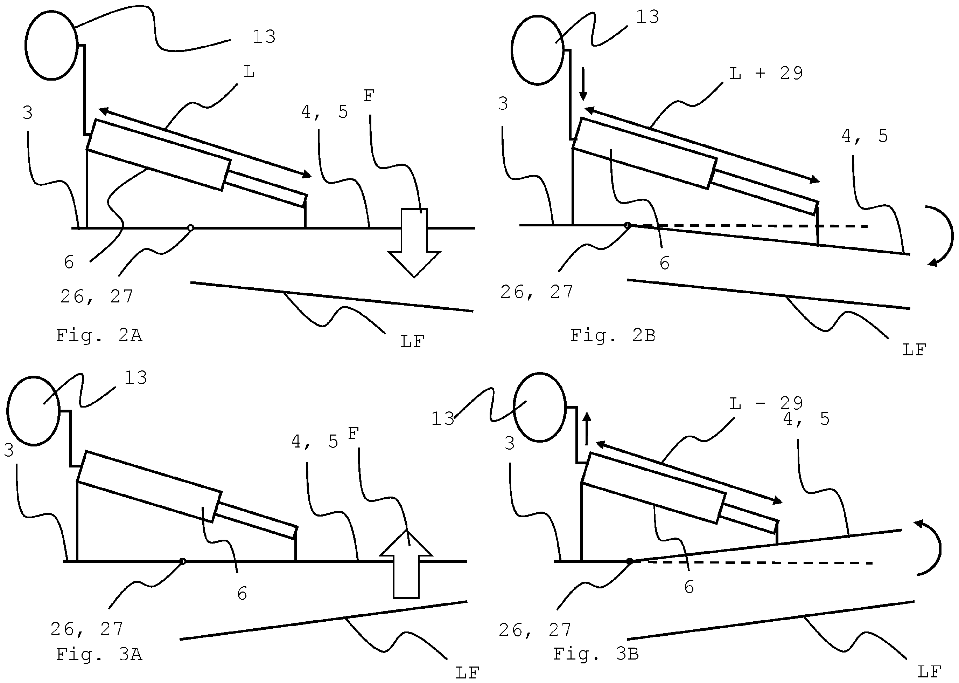

In den Figuren 2A, 2B und 3A, 3B wird schematisch die Funktion des Arbeitsgeräts 1 bzw. der Klappeinrichtung 6 näher dargestellt und anhand der Figuren erläutert. Dies betrifft hierzu das Arbeitsgerät 1 bzw. die Klappeinrichtung 6 in der Betriebsstellung.

In den Figuren 2A, 2B und 3A, 3B ist das Mittelteil 3 mit einem Seitenteil 4, 5 dargestellt, wobei das Seitenteil 4, 5 um die Drehachse 26, 27 drehbar ist. In der Figur 2A ist die Situation dargestellt, das Mittelteil 3 und das Seitenteil 4, 5 im Wesentlichen waagerecht sind. Aufgrund von Änderungen der Bodenkontur der landwirtschaftlichen Fläche LF, vorliegend ein Gefälle, wirkt eine entsprechende Kraft F auf das Seitenteil 3, vorliegend nach unten.

Durch die erfindungsgemäße Ausgestaltung der Klappeinrichtung 6, nämlich, dass einer auf ein Rahmenteil 4, 5 wirkenden Kraft F ein Kolben relativ zu dem anderen Kolben bewegbar ist. Hierdurch ist es möglich, dass das Seitenteil 4, 5 der Änderung der Bodenkontur der Fläche LF nachfolgen kann. Ein Nachfolgen bedeutet vorliegend eine Drehung um die Drehachse 26, 27. Insbesondere ist die Klappeinrichtung 6 eingerichtet, dass bei einer Bewegung des Kolbens relativ zu dem anderen Kolben sich eine Länge L der Klappeinrichtung 6 ändert. Ein Betrag 29 der Änderung der Länge L ist in der Figur 2B respektive 3B dargestellt. Bei einer nach unten wirkenden Kraft F verlängert sich die Länge L und bei einer nach oben wirkenden Kraft F verkürzt sich die Länge L.

Bevorzugt ist die Klappeinrichtung 6 mit einem Druckspeicher 13 fluidisch verbunden, wobei der Druckspeicher eingerichtet ist, ein durch die Bewegung des Kolbens 7, 8 relativ zu dem anderen Kolben 7, 8 verdrängtes Volumen aufzunehmen oder benötigtes Volumen bereitzustellen. Die Richtung des Fluidaustauschs zwischen dem Druckspeicher 13 und der Klappeinrichtung 6 ist mit Pfeilen schematisch dargestellt. Besonders bevorzugt ist der Druckspeicher 13 bodenseitig mit der Klappeinrichtung 6 fluidisch verbunden.

In den Figuren 3A und 3B ist der analoge Fall mit einer nach oben wirkenden Kraft F, durch eine Steigung der landwirtschaftlichen Fläche LF.

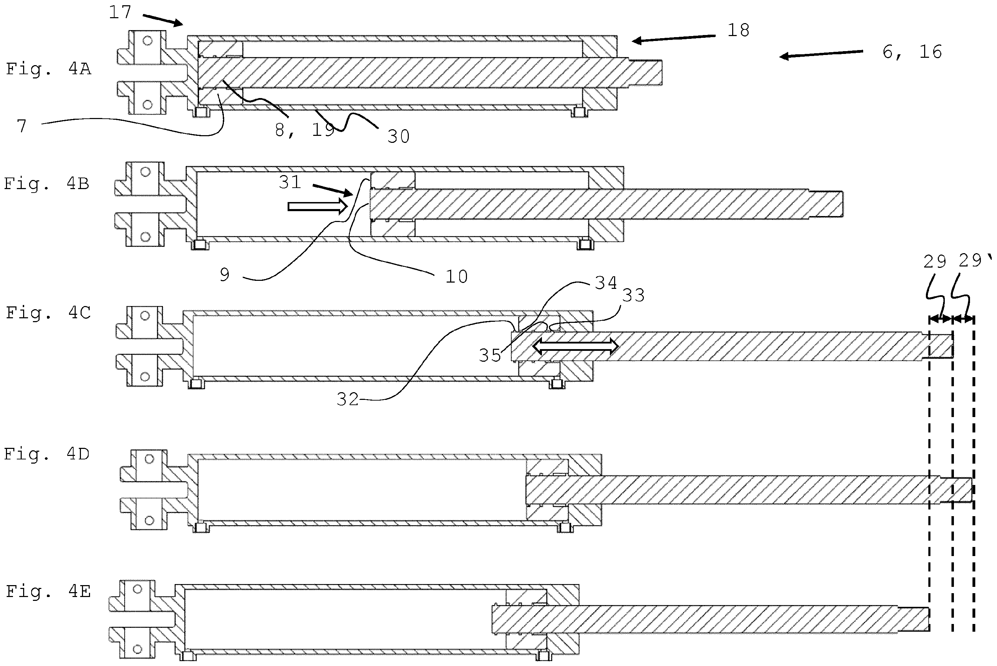

In den Figuren 4A bis 4E ist eine erste Ausführungsform der Klappeinrichtung 6 dargestellt, welche im Nachfolgenden näher erläutert wird.

Die Klappeinrichtung 6 umfasst zumindest einen Aktor 16, welcher vorliegend als ein doppeltwirkender hydraulischer Aktor 16 ausgebildet ist. Der Aktor 16 umfasst einen Aktorboden 17 und einen Aktorkopf 18, welche mittels eines Aktorrohrs 30 miteinander verbunden und voneinander beabstandet sind.

Der Aktor 16 weist einen Kolben 7 und einen anderen Kolben 8 auf, wobei der andere Kolben 8 mittels einer Kolbenstange 19 ausgebildet ist. Die Kolbenstange 19 ist mit dem Kolben 8 gekoppelt. Die Kolbenstange 19 ist gegenüber dem Kolben 7 beweglich. Die Kolbenstange 19 erstreckt sich durch den Kolben 7 hindurch. Dadurch ist eine wirksame Fläche 31 des Aktors 16 gebildet aus einer ersten Fläche 9 des Kolbens 7 und einer zweiten Fläche 10 der Kolbenstange 19, also dem anderen Kolben 8. Insbesondere bezieht sich die wirksame Fläche 31 auf das Ausfahren des Aktors 16, bevorzugt diejenige Fläche, welche dem Aktorboden 17 zugewandt ist. In der Figur 4A ist die Klappeinrichtung 6 in der Transportstellung dargestellt, das heißt, der Aktor 16 ist im Wesentlichen vollständig eingefahren. In der Transportstellung liegen bevorzugt die Flächen 9, 10 an dem Aktorboden 17 an.

Ein Ausfahren des Aktors 16 ist in der Figur 4B dargestellt, wobei sich die Kolben 7, 8 beim Ausfahren des Aktors 16 in die gleiche Richtung bewegen, bevorzugt in Richtung des Aktorkopfes 18.

In der Figur 4C ist die Klappeinrichtung 6 bzw. der Aktor 16 in der Betriebsstellung dargestellt. In der Betriebsstellung liegt der Kolben 7 an dem Aktorkopf 18 an, wobei der andere Kolben 8 in Form der Kolbenstange 19 relativ zu dem Kolben 7 beweglich ist. Die Länge L der Klappeinrichtung 6 bzw. des Aktors 16 ist durch die mechanische Ausgestaltung des Arbeitsgeräts 1 gegeben, so dass die Kolbenstange 19 eine Mittelstellung einnimmt bzw. einnehmen kann. In der Mittelstellung kann die Kolbenstange 19 relativ zu dem Kolben 7 in und gegen eine Erstreckungsrichtung der Kolbenstange 19 bewegt werden. Bevorzugt ist der Kolben 8 bzw. die Kolbenstange 19 ausgehend von der Mittelstellung um einen Betrag 29, 29' bewegbar. Die Beträge 29, 29' können gleich oder unterschiedlich groß ausgebildet sein. Bevorzugt ist der tatsächliche Wert des Betrags 29, 29' von der Ausgestaltung der Klappeinrichtung 6 abhängig.

Die Bewegung der Kolbenstange 19 relativ zu dem Kolben 7 kann bevorzugt mittels einer Begrenzungseinheit 15 begrenzt sein. Die Begrenzungseinheit 15 kann eine erste Begrenzung und eine zweite Begrenzung aufweisen, wobei die erste Begrenzung in beispielsweise die Bewegung in Erstreckungsrichtung der Kolbenstange 19 und die zweite Begrenzung die Bewegung entgegen der Erstreckungsrichtung der Kolbenstange 19 begrenzt. Beispielsweise kann die erste Begrenzung aus einem ersten Begrenzungselement 32 und einem dritten Begrenzungselement 34 und die zweite Begrenzung aus einem zweiten Begrenzungselement 33 und einem vierten Begrenzungselement 35 gebildet sein. Bevorzugt sind das dritte Begrenzungselement 34 und das vierte Begrenzungselement 35, in Erstreckungsrichtung gesehen, zwischen dem ersten Begrenzungselement 32 und dem zweiten Begrenzungselement 33 angeordnet. Bewegt sich die Kolbenstange 19 relativ zu dem Kolben 7, so können nach einem bestimmten zurückgelegten Weg der Kolbenstange 19 jeweils zwei der Begrenzungselemente 32, 33, 34, 35 miteinander wechselwirken, wodurch die Bewegung der Kolbenstange 19 verhindert ist. Die Wechselwirkung der Begrenzungselemente 32, 33, 34, 35 ist in den Figuren 4D und 4E dargestellt. Die Begrenzungselement 32, 33, 34, 35 können integral mit dem Kolben 7, 8 ausgebildet sein, und/oder lösbar mit den Kolben 7, 8 verbindbar sein. Denkbar ist, dass die Begrenzungselemente 32, 33, welche einem Kolben 7, 7 zugeordnet sind, durch Sprengringe und/oder dergleichen ausgebildet sein können. Die weiteren Begrenzungselemente 34, 35 des Kolbens 7, 8 können durch entsprechende Ausnehmungen, Vertiefungen und/oder dergleichen ausgebildet sein, welche bevorzugt zumindest teilweise komplementär zu den Begrenzungselementen 32, 33 sind.

Durch die Bewegung der Kolbenstange 19 relativ zu dem Kolben 7 kann die Länge der Klappeinrichtung 6, bevorzugt des Aktors 16, begrenzt veränderbar sein. Dies ist dargestellt durch die gestrichelten Linien zwischen den jeweiligen Figuren 4C, 4D und 4E.

Dadurch, dass bei einem Wirken einer Kraft F auf das Seitenteil 4, 5 zunächst die Kolbenstange 19 gegenüber dem Kolben 7 aufgrund der kleineren Fläche 10 der Kolbenstange 19 als Kolben 8, kann das Seitenteil 4, 5 durch die Bewegung der Kolbenstange 19 als Kolben 8 der Konturänderung der landwirtschaftlichen Fläche LF nachfolgen.

Dadurch, dass die Fläche 10 der Kolbenstange 19 konstant ist bei jeder der möglichen Bewegungsrichtungen, ist eine kraftsymmetrische Bewegung der Kolbenstange 19 als Kolben 8 möglich.

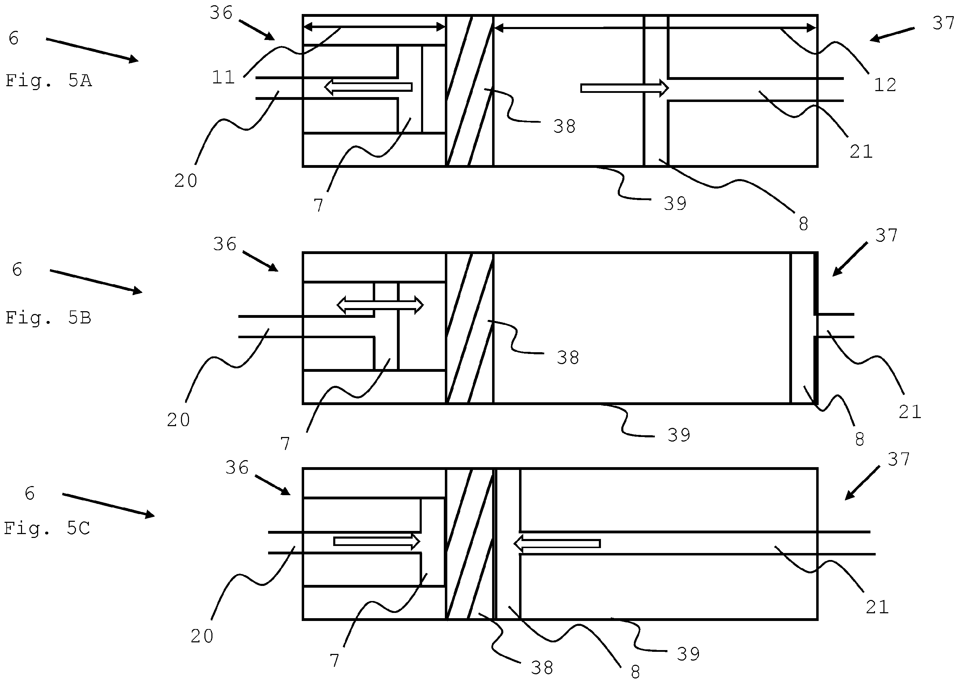

In den Figuren 5A bis 5C ist eine weitere Ausführungsform der Klappeinrichtung 6 dargestellt. Bevorzugt kann die Klappeinrichtung 6 durch zwei, eine Einheit bildende Aktoren 36, 37, ausgebildet sein, wobei ein erster Aktor 36 einen Kolben 7 und ein zweiter Aktor 37 den anderen Kolben 8 aufweist. Bevorzugt teilt der Kolben 7 den ersten Aktor 36 in zwei fluidisch voneinander getrennte fluidische Kammern und der andere Kolben 8 den zweiten Aktor 37 in zwei fluidisch voneinander getrennte Kammern. Mit dem Kolben 7 ist eine erste Kolbenstange 20 und mit dem Kolben 8 eine zweite Kolbenstange 21 verbunden, insbesondere fest verbunden.

Die zwei Aktoren 36, 37 sind mittels einer Trenneinheit 38 voneinander getrennt, insbesondere fluidisch voneinander getrennt, jedoch in einem gemeinsamen Gehäuse 39 angeordnet.

In der Figur 5A ist eine Darstellung des Ausfahrens der Klappeinrichtung 6 dargestellt, wobei sich die Kolben 7, 8 in entgegengesetzte Richtung bewegen, dargestellt durch die eingezeichneten Pfeile. Die Figur 5B zeigt die Klappeinrichtung 6 in der Betriebsstellung, wobei der Kolben 8 mit dem Aktorkopf des zweiten Aktors 37 in Kontakt steht. Der Kolben 7 des ersten Aktors 36 hingegen ist in der Mittelstellung, so dass eine Bewegung in und gegen die Erstreckungsrichtung der ersten Kolbenstange 20 möglich ist, dargestellt durch den Doppelpfeil in der Figur 5B; das heißt, dass sich der Kolben 7 relativ zu dem Kolben 8 bewegen kann. Die Figur 5C wiederum zeigt die Klappeinrichtung 6 in der Transportstellung. In der Transportstellung liegt der Kolben 7 an dem Aktorboden des ersten Aktors 36 und der Kolben 8 an dem Aktorboden des zweiten Aktors 37.

Ein erster Hub 11 des ersten Aktors 36 und ein zweiter Hub 12 des zweiten Aktors 37 sind in der Figur 5C lediglich rein schematisch dargestellt. Der erste Hub 11 ist kleiner als der zweite Hub 12.

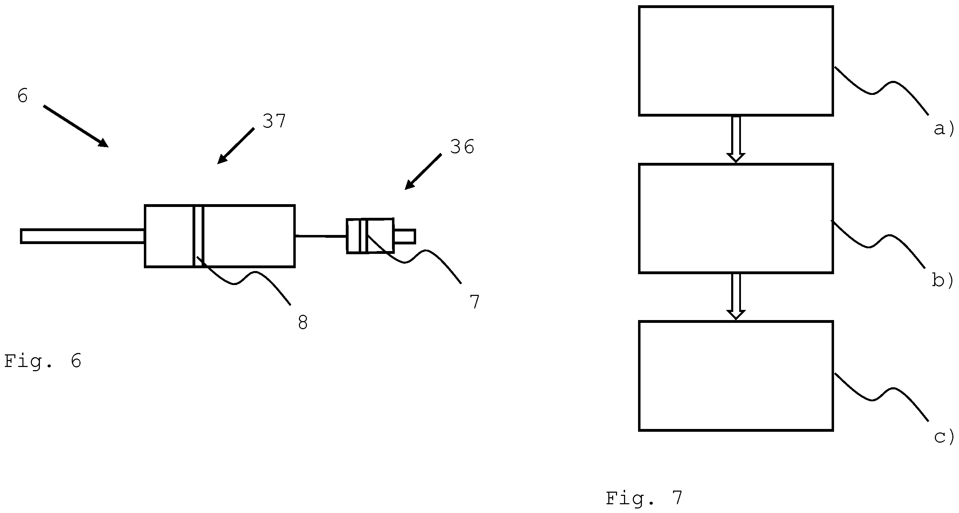

In der Figur 6 ist eine weitere Ausführungsform der Klappeinrichtung 6 dargestellt, welche hinsichtlich ihrer Funktion im Wesentlichen der Ausführungsform gemäß den Figuren 5A bis 5C entspricht. Die Aktoren 36, 37 sind nicht in einem gemeinsamen Gehäuse angeordnet, sondern in separaten Gehäusen. Bevorzugt sind die Aktoren 36, 37 gekoppelt mittels einem Verbindungselement 40, welches insbesondere eine starre Verbindung zwischen den Aktoren 36, 37 darstellen kann.

Die Bewegung des Kolbens 7 relativ zu dem Kolben 8 ist gemäß den Figuren 5A bis 5C und 6 ebenfalls begrenzbar. Die Begrenzung der Bewegung des Kolbens 7 kann durch die Abmessungen und/oder Ausgestaltung des zugehörigen Aktors 36 ausgebildet sein. Insbesondere ist der Hub des Aktors 36 durch die kurze Ausbildung des Aktors 36 begrenzt.

Die Figur 7 zeigt schematisch ein Verfahren zum Klappen von zwei Rahmenteilen 3, 4, 5 zueinander mittels einer Klappeinrichtung 6, umfassend die Verfahrensschritte:
a) Bereitstellen einer Klappeinrichtung 6, bevorzugt einer Klappeinrichtung 6 nach einer Ausführungsform;
b) Betätigen der Klappeinrichtung 6 und Bringen eines Rahmenteils 3, 4, 5 in eine Betriebsstellung durch eine Bewegung beider Kolben 7, 8;
c) in der Betriebsstellung, Bewegen eines der Kolben 7, 8 relativ zu dem anderen Kolben 7, 8 mittels einer auf ein Rahmenteil 3, 4, 5 wirkenden Kraft F.

Bevorzugt kann die Betriebsstellung einstellbar sein durch eine Bewegung der Kolben 7, 8 in gleiche Richtungen oder in entgegengesetzte Richtungen. Die Klappeinrichtung 6 ist eingerichtet, dass in der Betriebsstellung der Kolben 7, 8 mit der kleineren Fläche zunächst aufgrund der wirkenden Kraft F relativ zu dem anderen Kolben 7, 8 bewegbar ist. Das bedeutet, dass einer der Kolben 7, 8 zunächst in seiner Position unverändert ist und sich der andere Kolben 7, 8 relativ dazu bewegen kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: landwirtschaftliches Arbeitsgerät
- 2: Rahmenteil
- 3: erstes Rahmenteil / Mittelteil
- 4: zweites Rahmenteil / erstes Seitenteil
- 5: drittes Rahmenteil / zweites Seitenteil
- 6: Klappeinrichtung
- 7: Kolben
- 8: Kolben
- 9: erste Fläche
- 10: zweite Fläche
- 11: erster Hub
- 12: zweiter Hub
- 13: Druckspeicher
- 15: Begrenzungseinheit
- 16: Aktor
- 17: Aktorboden
- 18: Aktorkopf
- 19: Kolbenstange
- 20: erste Kolbenstange
- 21: zweite Kolbenstange
- 22: Messerwalzensegment
- 23: Scheibensegment
- 24: Striegelsegment
- 25: Packersegment
- 26: erste Drehachse
- 27: zweite Drehachse
- 28: Tiefenführungselement
- 29, 29': Betrag
- 30: Aktorrohr
- 31: wirksame Fläche
- 32: erstes Begrenzungselement
- 33: zweites Begrenzungselement
- 34: drittes Begrenzungselement
- 35: viertes Begrenzungselement
- 36: erster Aktor
- 37: zweiter Aktor
- 38: Trenneinheit
- 39: Gehäuse
- 40: Verbindungselement

## Patentansprüche

1. Klappeinrichtung (6), welche zum Klappen von zwei Rahmenteilen (3, 4, 5) zueinander eingerichtet ist,
**dadurch gekennzeichnet, dass**
die Klappeinrichtung (6) zumindest zwei unterschiedliche Flächen (9, 10) aufweisende Kolben (7, 8) umfasst, wobei mittels einer auf ein Rahmenteil (3, 4, 5) wirkenden Kraft (F) ein Kolben (7, 8) relativ zu dem anderen Kolben (7, 8) bewegbar ist.

2. Klappeinrichtung (6) nach Anspruch 1, **dadurch gekennzeichnet, dass** die Flächen (9, 10) der Kolben (7, 8) zumindest hinsichtlich ihres Flächeninhalts unterschiedlich sind.

3. Klappeinrichtung (6) nach einem der Ansprüche 1 bis 2, **dadurch gekennzeichnet, dass** ein Hub des einen Kolbens (7, 8) kleiner ist als ein Hub des anderen Kolbens (7, 8), wobei bevorzugt der Hub des Kolbens (7, 8) mit einer kleineren Fläche (9, 10) kleiner ist als ein Hub des Kolbens (7, 8) mit einer größeren Fläche (9, 10).

4. Klappeinrichtung (6) nach Anspruch 1 bis 3, **dadurch gekennzeichnet, dass** die Bewegung des einen Kolbens (7, 8) relativ zu dem anderen Kolben (7, 8) begrenzt ist, insbesondere mittels einer Begrenzungseinheit (15).

5. Klappeinrichtung (6) nach einem der Ansprüche 1 bis 4, **dadurch gekennzeichnet, dass** eine wirksame Fläche (31) zum Ausfahren der Klappeinrichtung (6) gebildet ist aus den zwei unterschiedlichen Flächen (9, 10) der Kolben (7, 8).

6. Klappeinrichtung (6) nach einem der Ansprüche 1 bis 5, **dadurch gekennzeichnet, dass** bei Wirken der Kraft (F) auf eines der Rahmenteile (3, 4, 5) zunächst der Kolben (7, 8) mit geringerer Fläche (9, 10) bewegbar ist und bei Eintreten einer Wechselwirkung mit dem anderen Kolben (7, 8) der andere Kolben (7, 8) bewegbar ist.

7. Klappeinrichtung (6) nach einem der Ansprüche 1 bis 6, **dadurch gekennzeichnet, dass** die auf ein Rahmenteil (3, 4, 5) wirkende Kraft durch Bodenunebenheiten einer landwirtschaftlichen Fläche (LF) hervorgerufen ist.

8. Landwirtschaftliches Arbeitsgerät (1) mit zumindest zwei zueinander in eine Betriebsstellung und eine Transportstellung klappbaren Rahmenteilen (3, 4, 5),
**dadurch gekennzeichnet, dass**
die Rahmenteile (3, 4, 5) mittels einer Klappeinrichtung (6) nach einem der Ansprüche 1 bis 7 klappbar sind.

9. Landwirtschaftliche Maschine (1) nach Anspruch 8, **dadurch gekennzeichnet, dass** die Klappeinrichtung (6) mit einem Druckspeicher (13) fluidisch verbunden ist, wobei der Druckspeicher eingerichtet ist, ein durch die Bewegung des Kolbens (7, 8) relativ zu dem anderen Kolben (7, 8) verdrängtes Volumen aufzunehmen oder benötigtes Volumen bereitzustellen.

10. Landwirtschaftliche Maschine (1) nach einem der Ansprüche 8 bis 9, **dadurch gekennzeichnet, dass** eine Länge (L) der Klappeinrichtung (6) um einen Betrag (29) veränderbar ist, wobei bevorzugt mittels der Bewegung des Kolbens (7, 8) die Länge (L) verkürzbar und/oder verlängerbar ist, und wobei der Betrag bevorzugt 50 mm, weiter bevorzugt 30 mm und bevorzugter 25 mm ist.

11. Verfahren zum Klappen von zwei Rahmenteilen (3, 4, 5) zueinander mittels einer Klappeinrichtung (6), umfassend die Verfahrensschritte:
a) Bereitstellen einer Klappeinrichtung (6), bevorzugt einer Klappeinrichtung (6) nach einem der Ansprüche 1 bis 7;
b) Betätigen der Klappeinrichtung (6) und Bringen eines Rahmenteils (3, 4, 5) in eine Betriebsstellung durch eine Bewegung beider Kolben (7, 8);
c) in der Betriebsstellung, Bewegen eines der Kolben relativ zu dem anderen Kolben mittels einer auf ein Rahmenteil (3, 4, 5) wirkenden Kraft.
